# EUROPEAN PATENT APPLICATION

(11) **EP 4 757 311 A1**
(43) Date of publication of application: **10.06.2026**
(21) Application number: 24218230.1
(22) Date of filing: 09.12.2024
(51) Int. Cl.: H04N 19/117, G06T 7/00, H04N 19/167, H04N 19/17, H04N 19/33

(54) **GENERATING MEDICAL IMAGE**

(71) Applicant: Koninklijke Philips N.V., 5656 AE Eindhoven (NL)
(72) Inventor: SCHMITT, Holger, Eindhoven (NL); SCHULZ, Heinrich, Eindhoven (NL); BERGTHOLDT, Martin, Eindhoven (NL); NETSCH, Thomas, Eindhoven (NL)
(74) Representative: Philips Intellectual Property & Standards

(57) **Abstract**

Proposed concepts thus aim to provide schemes, solutions, concepts, designs, methods and systems pertaining to generating a medical image file. In particular, embodiments aim to provide a method for generating a medical image file by finding a region of interest in a medical image (and thereby, or separately, region(s) of non-interest) and then processing the image so that the region of interest and the region(s) of non-interest have different resolutions to one another (with the region of non-interest having a lower resolution than the region of interest). In other words, it is proposed that by identifying a region of interest in a medical image, comprising an anatomical feature, a modified medical image can be generated with spatially-varied resolution.

## Description

### FIELD OF THE INVENTION

This invention relates to the field of generating a medical image file.

### BACKGROUND OF THE INVENTION

Tomographic medical images that are generated, for example, by photon counting CT scanners, can be reconstructed at increasingly high spatial resolution, which can result in extremely large image matrices. Such images impede clinical workflows because it can take a long time to transmit them over hospital networks, and they leave large memory footprints when stored and processed.

For example, traditionally, CT images were reconstructed and stored with image matrices of 512x512 pixels at 16 bits, resulting in file sizes of 0.5MB per slice. The latest photon counting scanners, however, can resolve up to 25 line pairs per cm (lp/cm) or more. With a field of view of up to 50cm, image matrices up to 2500x2500 pixels would be required to adequately represent the increased resolution, effectively increasing the file size by a factor of 25. Already, network transfers and image loading times are major bottlenecks in radiology workflow, such that any further slowdown must be well justified by the gain in diagnostic accuracy.

### SUMMARY OF THE INVENTION

The invention is defined by the claims.

According to examples in accordance with an aspect of the invention, there is provided a method for generating a medical image file.

The method comprises: processing a medical image comprising a representation of an anatomical feature to identify a region of interest comprising the anatomical feature and at least one region of non-interest; and processing the medical image to generate a modified medical image for subsequent compression, such that the region of interest has a predetermined target resolution and the at least one region of non-interest has a predetermined base resolution, wherein the predetermined target resolution is higher than the predetermined base resolution.

Proposed concepts thus aim to provide schemes, solutions, concepts, designs, methods and systems pertaining to generating a medical image file. In particular, embodiments aim to provide a method for generating a medical image file by finding a region of interest in a medical image (and thereby, or separately, region(s) of non-interest) and then processing the image such that the region of interest and the region(s) of non-interest have different resolutions from one another (with the region of non-interest having a lower resolution than the region of interest).

In other words, it is proposed that by identifying a region of interest in a medical image, comprising an anatomical feature, a modified medical image can be generated with spatially-varied resolution. For example, different amounts of data can be removed from the region(s) of interest and non-interest respectively, according to different predetermined resolutions, wherein the resolution that the region of interest is kept at is, of course, higher than the resolution at which the areas of non-interest are kept.

This allows a medical image file to be kept as small as possible while still providing increased spatial resolution for clinically-important subregions of the image. For example, in a full CT image of a subject's heart and thorax, specifically the coronary artery can be kept at a higher resolution than the rest of the image. Reconstructing multiple sub-volumes with varying resolution would be highly sub-optimal, as they would lack context and would be cumbersome to review separately, whereas the present invention provides a single image file with adaptive resolution, which keeps the regions of non-interest around the regions of interest for context, albeit with less detail.

In a simple example, an X-ray image of a subject's upper torso is processed, and multiple regions of interest are found comprising multiple broken ribs respectively. The rest of the image is then deemed a region of non-interest. Before the image goes through standard compression steps, it is processed to reduce the resolution of the region of non-interest from the resolution of the image to a predetermined base resolution. The resolution of the regions of interest can also be downgraded (e.g., slightly) to a predetermined target resolution (which is, of course, higher than the base resolution). This modified medical image can then be compressed in a standard, traditional way, providing a smaller medical image file with clinically-important regions kept in a required high resolution but while still providing context for these regions in a minimum resolution.

Ultimately, an improved method for generating a medical image file is provided by processing a medical image to first identify a region of interest comprising an anatomical feature and then to generate a modified (less data-heavy) medical image for subsequent compression. Furthermore, a method for displaying a modified medical image is also provided which can, for example, indicate to a user which areas of the image have had their resolutions altered.

In some embodiments, processing the medical image to generate a modified medical image may comprise: downgrading the resolution of the at least one region of non-interest based on the predetermined base resolution for the at least one region of non-interest and the resolution of the medical image; and downgrading the resolution of, dependent on a predetermined target resolution for the region of interest and the resolution of the medical image, the region of interest. By treating the regions of interest and non-interest differently, the resolution of the region of non-interest can be downgraded more than the resolution of the region of interest (which may not even have its resolution downgraded at all if, for example, its predetermined target resolution matches or exceeds the resolution of the medical image).

In some embodiments, processing the medical image to generate a modified medical image may further comprise decomposing the medical image into at least two versions of the medical image corresponding to at least the target resolution and the base resolution respectively; and, for each version of the image: removing, dependent on the predetermined base resolution and the resolution of the version of the medical image, data from the at least one region of non-interest; and removing, dependent on the predetermined target resolution and the resolution of the version of the medical image, data from the region of interest; such that the modified medical image comprises at least two modified versions of the medical image. Decomposing the medical image into different resolution levels may provide an efficient method of facilitating the downgrading of resolution of different regions of the medical image. For example, the image may be decomposed into two versions, one with a resolution matching the target resolution and one with a resolution matching the base resolution. In the version corresponding to the target resolution, all data in the regions of non-interest may be deleted, and all data from the region of interest may be kept. In the version corresponding to the base resolution, all data may be kept.

In some embodiments, decomposing the medical image may comprise using wavelet transforms. Wavelet transforms may provide an efficient and/or effective method of multiresolution analysis of the medical image, capturing features at different scales while preserving spatial information.

In some embodiments, removing data may comprise removing all the data. This allows for data in versions of the image which is not required (e.g., for data in the region of non-interest in versions with a resolution higher than the predetermined base resolution) to be totally removed, thus optimally reducing the file size of the modified medical image.

In some embodiments, the medical image may comprise a representation of at least two different anatomical features, and at least two different regions of interest may be identified comprising each of the at least two different anatomical features respectively, and wherein the at least two different anatomical features may correspond to at least two different predetermined target resolutions respectively. In this way, a more complex medical image comprising more than one anatomical feature of interest may be processed to generate a modified medical image wherein the two anatomical features can be stored at different resolutions to one another, thus allowing for hierarchies in the importance of anatomical features to be taken advantage of.

In some embodiments, the predetermined target resolution may be based on a predetermined database of anatomical features and corresponding predetermined target resolutions. This may be an efficient way to provide predetermined target resolutions for different anatomical features.

In some embodiments, the predetermined database may be exam-specific. For example, different anatomical features may be of different clinical-importance dependent on what medical exam is being performed. For example, the target resolution for the lung could be less in a general screening exam than in a post-surgery follow-up. There may also be different predetermined target resolutions depending on whether the medical image is to be immediately viewed or is for long-term storage.

In some embodiments, the anatomical feature may comprise at least one of: an organ; a bone; a muscle; a vein; an artery; and fat. These are all types of anatomical features which may be of clinical interest.

In some embodiments, processing the medical image to identify the region of interest may comprise segmenting the medical image. Segmentation may provide an efficient and/or effective method of identifying anatomical features, for example.

In some embodiments, segmenting the medical image may comprise using an Al- or atlas-based segmentation. These are both effective forms of segmentation for the present task.

In some embodiments, segmenting the medical image may be based on user input. This may facilitate users directly indicating regions of particular interest to them, for example.

In some embodiments, the medical image may comprise at least one of: a Computed Tomography image; a Magnetic Resonance image; an ultrasound image; an X-ray image; a Positron Emission Tomography image; a mammography image; and a fluoroscopy image. These are all types of medical image which could particularly benefit from the present invention, although, as would be understood by the skilled person, any other type of medical image would be suitable for the present invention.

In some embodiments, the medical image file may comprise a JPEG2000 image file. This may be a particularly suitable image file type for storing an image with spatially-varied resolution.

According to another aspect of the invention, there is provided a computer-implemented method for displaying a medical image file generated by the method of any of the above-disclosed methods. The method comprising: obtaining a modified medical image having a region of interest with a predetermined target resolution and at least one region of non-interest with a lower predetermined base resolution; obtaining resolution indicator data indicating the at least one region of non-interest by receiving the resolution indicator data or by determining the resolution indicator data by processing the medical image; and displaying the modified medical image with an overlay based on the resolution indicator data.

In this way, a user may explicitly be informed as to which parts of the medical image have had their resolution downgraded (e.g., the region(s) of non-interest, and potentially, also, the region of interest) such that there is no confusion as to why part of an image might appear low-quality. Furthermore, this resolution indicator data may either be directly communicated alongside the medical image file (e.g., from the system which processed the medical image to identify the region of interest and the at least one region of non-interest) or it may be determined from analyzing the medical image itself, for example to identify regions of downgraded resolution or regions of removed data in different versions of the medical image.

According to another aspect of the invention, there is provided a computer program product comprising computer program code means which, when executed on a computing device having a processing system, cause the processing system to perform all of the steps of the computer-implemented method of any herein disclosed method.

According to another aspect of the invention, there is provided a system for generating a medical image file. The system comprising a processing unit configured to: process a medical image comprising a representation of an anatomical feature to identify a region of interest comprising the anatomical feature and at least one region of non-interest; and process the medical image to generate a modified medical image for subsequent compression, such that the region of interest has a predetermined target resolution and the at least one region of non-interest has a predetermined base resolution, wherein the predetermined target resolution is higher than the predetermined base resolution.

Thus, there may be proposed concepts for generating a medical image file, and this may be done based on processing a medical image first to identify a region of interest and then to generate a modified medical image for subsequent compression.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1A is a simplified flow diagram of a method for generating a medical image file according to a proposed embodiment;
Fig. 1B is a simplified flow diagram of a method for generating a medical image file according to a proposed embodiment;
Fig. 2 is a flow diagram of a method for generating a medical image file according to a proposed embodiment;
Fig. 3 is a flow diagram of a method for generating a medical image file according to a proposed embodiment;
Fig. 4 is a simplified illustration of modified versions of a medical image comprising two anatomical features, according to a proposed embodiment;
Fig. 5 is a flow diagram of a method for displaying a medical image file generated by any herein disclosed method for generating a medical image file, according to a proposed embodiment;
Fig. 6 is a simplified block diagram of a system for generating a medical image file according to a proposed embodiment; and
Fig. 7 illustrates an example of a computer within which one or more parts of an embodiment may be employed.

### DETAILED DESCRIPTION OF THE EMBODIMENTS

The invention will be described with reference to the Figures.

Embodiments of the invention aim to provide a method for generating a medical image file. This can be achieved by finding a region of interest in a medical image (and thereby, or separately, region(s) of non-interest) and then processing the image so that the region of interest and the region(s) of non-interest have different resolutions from one another (with the region of non-interest having a lower resolution than the region of interest).

In other words, it is proposed that by identifying a region of interest in a medical image comprising an anatomical feature, a modified medical image can be generated with spatially-varied resolution. For example, different amounts of data can be removed from the region(s) of interest and non-interest respectively, according to different predetermined resolutions, wherein the resolution that the region of interest is kept at is, of course, higher than the resolution at which the areas of non-interest are kept.

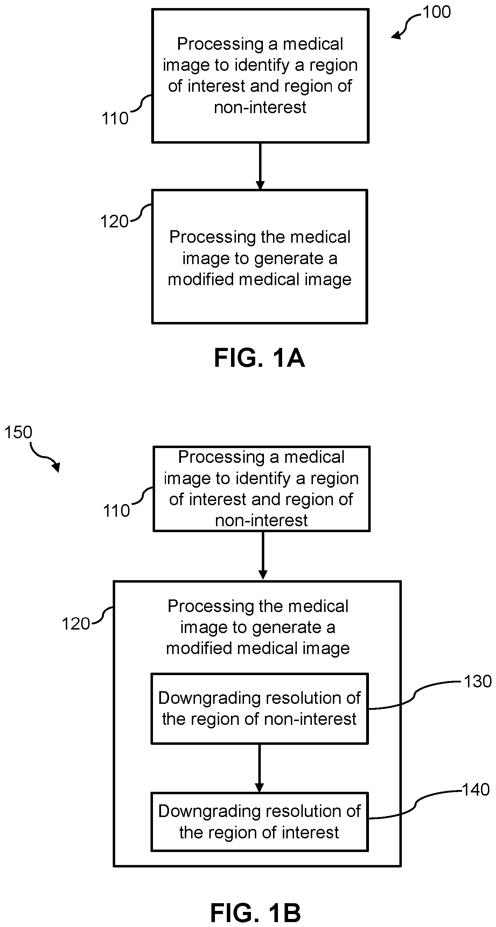

Referring now to Fig. 1A, there is depicted a simplified flow diagram of a method 100 for generating a medical image file according to a proposed embodiment.

The method 100 begins with the step 110 of processing a medical image comprising a representation of an anatomical feature to identify a region of interest comprising the anatomical feature and at least one region of non-interest. For example, the region of interest can comprise only the anatomical feature, exactly mapping its contours, or it can, for example, include a border of a certain thickness around the anatomical feature (for example, 1-10 pixels), or it can take the form of a circle or rectangle centered on the anatomical feature and totally encompassing it. Preferably, however, the region of interest takes an identical shape to the anatomical feature, such that, for example, the subsequent resolution downgrading will be more precise and thus data efficient.

For example, in some embodiments, identifying the region of interest can comprise identifying the anatomical feature first and then determining the region of interest based on the identified anatomical feature. Identifying the region of interest can, for example, be based on user input or, as will be described in more detail later, segmentation. In some embodiments, identifying the anatomical feature can be performed by a machine-learning model trained to identify anatomical features, and could take many suitable forms, as would be understood by the skilled person.

The at least one region of non-interest can be actively identified (i.e., identifying features and classifying these as regions of non-interest) or they can simply be identified after all the regions of interest have been identified (i.e., all the leftover parts of the medical image which have not been identified as regions of interest can be identified, as default, as one or more regions of non-interest).

In this embodiment, the anatomical feature comprises a subject's heart, however, in other embodiments, the anatomical feature can comprise at least one of: an organ; a bone; a muscle; a vein; an artery; fat; and a tumor. These are all types of anatomical features which can be of clinical interest.

In this embodiment, the medical image comprises a computed tomography (CT) image, however in other embodiments, the medical image can comprise any suitable medical image such as, for example, at least one of: a Magnetic Resonance image; an ultrasound image; an X-ray image; a Positron Emission Tomography image; a mammography image; and a fluoroscopy image. These are all types of medical image which could particularly benefit from the present invention, although, as would be understood by the skilled person, any other type of medical image could also be suitable for the present invention.

Step 120 comprises processing the medical image to generate a modified medical image for subsequent compression. For example, after the processing of step 120, the modified medical image can undergo the standard encoding and compression steps of whatever format the medical image file is in (e.g., JPEG2000, HEIF, AVIF, PNG, etc.). Preferably, the file format should be DICOM-compliant.

The processing of the medical image in step 120 is such that, in the modified medical image, the region of interest has a predetermined target resolution and the at least one region of non-interest has a predetermined base resolution, wherein the predetermined target resolution is higher than the predetermined base resolution. To be clear, the predetermined target resolution is for the region of interest and the predetermined base resolution is for the region(s) of non-interest.

In this embodiment, the predetermined target resolution is based on a predetermined database of anatomical features and corresponding predetermined target resolutions. This is an efficient way to provide predetermined target resolutions for different anatomical features. In other embodiments, however, the predetermined target resolution can be based on any suitable information, as would be understood by the skilled person. For example, it can be based on user input, or based on a matrix or based on a suitable algorithm. Further, in this embodiment, the predetermined database is exam-specific. For example, different anatomical features can be of different clinical-importance dependent on what medical exam is being performed. For example, the target resolution for the lung could be less in a general screening exam than in a post-surgery follow-up. There can also be different predetermined target resolutions depending on whether the medical image is to be immediately viewed or is for long-term storage. Of course, the skilled person would understand that it is not essential that the predetermined database is exam-specific, and in other embodiments, one predetermined database can be used in all contexts, i.e., not exam-specific.

In some embodiments, the medical image file can comprise a JPEG2000 image file. This is a particularly suitable image file type for storing an image with spatially-varied resolution.

For example, as will be described later, processing the medical image to generate a modified medical image with spatially-varied resolution can comprise downgrading the resolution of the different regions of the image by different amounts (or, in the case of the region of interest, not at all), or it can be performed in any other suitable way, as would be understood by the skilled person. For example, two different versions of the medical image could be generated (one with a high resolution, i.e., the target resolution, and one with a low resolution, i.e., the base resolution) and then an essentially entirely new medical image could be built from different parts of the low and high resolution versions of the original medical image. For example, the parts of the low-resolution version of the original medical image corresponding to the at least one region of non-interest could be used and the parts of the high-resolution version of the original medical image corresponding to the region of interest could be used. This newly built medical image could then be taken as the modified medical image.

Referring now to Fig. 1B, there is depicted a flow diagram of a method 150 for generating a medical image file according to a proposed embodiment. Step 110 is substantially the same as has already been described in relation to method 100 of Fig. 1A.

In this embodiment, step 120 (i.e., processing the medical image to generate a modified medical image) comprises steps 130 and 140. Step 130 comprises downgrading the resolution of the at least one region of non-interest based on the predetermined base resolution for the at least one region of non-interest and the resolution of the medical image. For example, if the resolution of the medical image is 20 line pairs per cm (lp/cm) and the predetermined base resolution is 5lp/cm, then the resolution of the at least one region of non-interest can be downgraded until the resolution of said region is 5lp/cm.

Step 140 comprises downgrading the resolution of, dependent on the predetermined target resolution for the region of interest and the resolution of the medical image, the region of interest. For example, if the resolution of the medical image is 20lp/cm and the predetermined target resolution is 20lp/cm (or higher), then the resolution of the region of interest does not need to be downgraded. However, if for example, the predetermined target resolution is 15lp/cm, then the resolution in the region of interest can be downgraded until the resolution of said region is 15lp/cm.

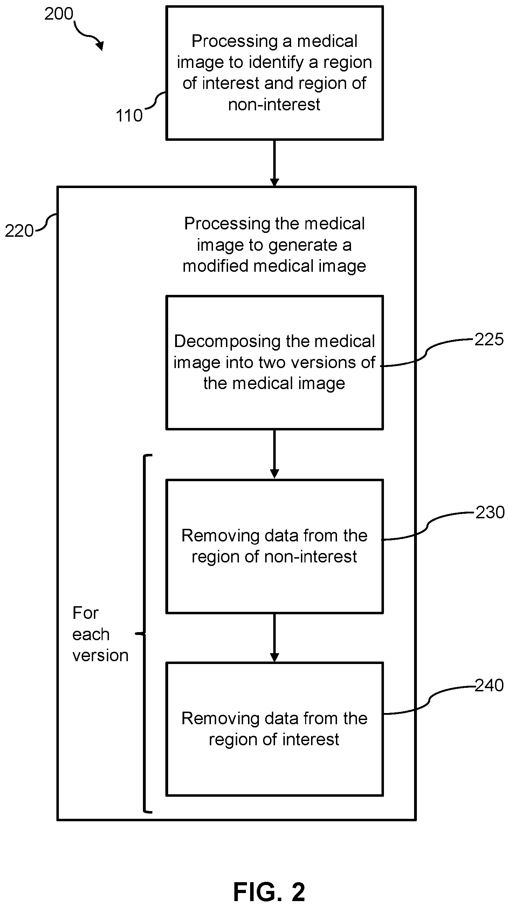

Referring now to Fig. 2, there is depicted a flow diagram of a method 200 for generating a medical image file according to a proposed embodiment. Step 110 is substantially the same as has been described in relation to the method 100 of Fig. 1A.

Step 220 comprises processing the medical image to generate a modified medical image for subsequent compression and comprises the following steps:
Step 225 - decomposing the medical image into at least two versions of the medical image corresponding to at least the target resolution and the base resolution respectively. Versions of the medical image can also be understood as layers of the medical image or resolution levels of the medical image. For example, the medical image could be decomposed into six versions/layers/levels with different resolutions, as long as there is at least one version with a resolution matching the predetermined target resolution and at least one version with a resolution matching the predetermined base resolution. To be clear, each version of the medical image has a different resolution to every other. For example, in some embodiments, each version has half the resolution of the version above it, or in other embodiments, each version is separated by a constant from one above or below it (e.g., 2lp/cm or 5lp/cm).

In this embodiment, decomposing the medical image comprises using wavelet transforms. Wavelet transforms provide an efficient and/or effective method of multiresolution analysis of images, capturing features at different scales while preserving spatial information, however, as the skilled person would realize, any suitable method of decomposing the medical image into multiple versions (with different resolutions) can be used.

Steps 230 and 240 are then performed for each version of the medical image. Step 230 comprises removing, dependent on the predetermined base resolution and the resolution of the version of the medical image, data from the at least one region of non-interest. In this embodiment, for example, if the resolution of the version of the medical image is higher than the predetermined base resolution, then all data from the region of non-interest is removed. If this is repeated for every version of the medical image (other than the version matching the resolution of the base resolution), then the amount of data used to store information corresponding to the region of non-interest can be substantially reduced, while still retaining a minimum amount of detail.

Step 240 comprises removing, dependent on the predetermined target resolution and the resolution of the version of the medical image, data from the region of interest. For example, if the predetermined target resolution is lower than the resolution of the version of the medical image, then all data in that version can be deleted, however if the predetermined target resolution is the same as, or higher than, the resolution of the version, then all data in the region of interest can be kept.

To be clear, in this embodiment, removing data comprises removing all the data, i.e., setting values within said regions to zero. This allows for data in versions of the image which is not required (e.g., for data in the region of non-interest in versions with a resolution higher than the predetermined base resolution) to be totally removed, thus optimally reducing the file size of the modified medical image.

Repeating steps 230 and 240 for each version of the medical image thus generates modified versions of the image, for example, at least two modified versions of the medical image. In this embodiment then, the modified medical image comprises the at least two modified versions of the medical image.

Decomposing the medical image into different resolution levels provides an efficient method of facilitating spatially-varied resolution in the modified medical image. For example, the image can be decomposed into two versions, one with a resolution matching the target resolution and one with a resolution matching the base resolution. In the version corresponding to the target resolution, all data in the regions of non-interest can be deleted, and all data from the region of interest can be kept. In the version corresponding to the base resolution, all data can be kept.

In a simple example of the invention in use, a user can define a target resolution on a per anatomical feature basis, e.g., 5lp/cm for a region outside the body contour, 10lp/cm for the thorax, and 20lp/cm for the coronary region. This can be set via a configuration unit, for example, and this definition can be done in a general way (e.g., stored in exam cards) or in a patient-specific way based on surview images, for example. The target organs then need to be located/identified in the image(s) (e.g., provided by the CT reconstruction unit). This can be done using adequate segmentation algorithms, for instance. For example, the high-resolution medical image can be used as input for JPEG2000 compression, starting with a wavelet transform decomposing the image into multiple resolution levels. The key inventive step here, however, is to remove all the information from resolution levels higher than defined in the configuration of the respective anatomical feature regions, before proceeding to the subsequent encoding and compression steps of JPEG2000. This can thus yield a DICOM-compliant, JPEG2000-compressed image which can be sent via network, stored on a PACS, and opened by DICOM viewers.

Continuing the example, as with any standard JEPG2000-compressed image, a viewer can progressively load resolution levels without need for complete transfer/reading of the image file. This is helpful to speed up processing steps that can operate on low-resolution images, e.g., AI-based pre-analysis of images. On top of this, as will be described later, a viewer can also reconstruct any segmentation masks that have been applied during compression of the image and display these regions in the form of semi-transparent overlays or contours, for example. Thus, the segmentation masks / resolution indicator data do not have to be saved and communicated explicitly, but a user can still be made aware of the varying resolution in different regions of the image at no extra cost in terms of file size.

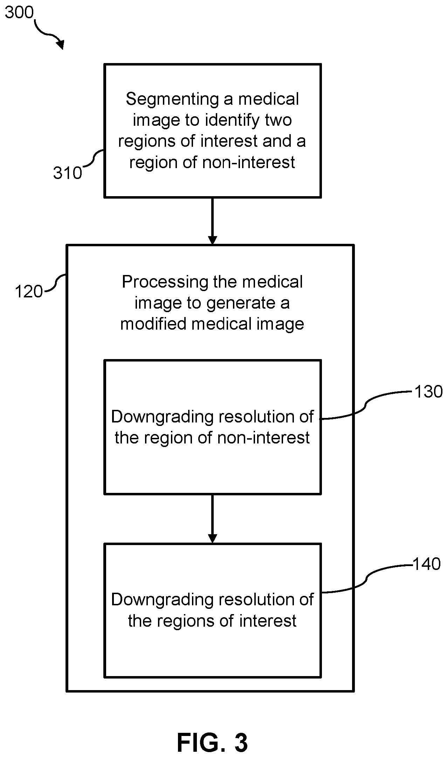

Referring now to Fig. 3, there is depicted a flow diagram of a method 300 for generating a medical image file according to a proposed embodiment. Steps 120, 130, and 140 are substantially the same as have been described in relation to the method 100 in Fig. 1B.

In step 310, processing the medical image to identify the region of interest comprises segmenting the medical image. In this embodiment, in fact, the medical image comprises a representation of at least two different anatomical features. At least two different regions of interest are thus identified comprising each of the at least two different anatomical features respectively. For example, one region of interest is identified comprising one anatomical feature and another region of interest is identified comprising the other anatomical feature. The two different anatomical features correspond to two different predetermined target resolutions respectively, and as would be understood by the skilled person, this concept can be extrapolated to any number of different anatomical features. In this way, a more complex medical image comprising more than one anatomical feature of interest can be processed to generate a modified medical image wherein the two anatomical features are stored at different resolutions to one another, thus allowing for hierarchies in the importance of anatomical features to be taken advantage of.

Segmentation provides an efficient and/or effective method of identifying anatomical features, but as would be understood by the skilled person, even if the medical image comprises two or more anatomical features, identifying the corresponding regions of interest does not have to comprise segmenting the image but can comprise any suitable method of identifying said regions (such as, for example, simply being indicated by a user).

In this embodiment, segmenting the medical image comprises using an AI-based segmentation. AI-based segmentation is a process where artificial intelligence algorithms automatically partition an image or data into meaningful regions or objects based on learned patterns and features. In other embodiments, however, segmenting the medical image can comprise using an atlas-based segmentation. Atlas-based segmentation involves using a pre-segmented reference dataset (an atlas) to guide the segmentation of new images by aligning and adapting the atlas to the medical image's characteristics. Both AI- and atlas-based segmentation are effective forms of segmentation for the present task.

In some embodiments, the segmentation can further/alternatively be based on user input. This can facilitate users directly indicating regions of particular interest to them, for example.

In another example of the invention in use, an initial reconstructed image is obtained in which organs, tissues, and/or other regions can be identified. This initial medical image could be a 3D surview image, or an image with standard spatial resolution (e.g., a 512x512 pixel matrix). On the initial medical image, regions of particular interest are identified. Preferably this is done automatically, for example, using an AI- or atlas-based segmentation method, however, a user can additionally or alternatively manually indicate regions of interest. The output of this step will thus be a label image in which each voxel/pixel of the initial medical image is assigned to exactly one label, e.g., lung, abdomen, brain, skull, or background (e.g., outside of body). Such label images could be manually edited after their automatic setting, if needed.

In a pre-configuration step, the user could specify, in a database, a target resolution per tissue label assigned in the previous step, for example, measured in line pairs per cm (lp/cm). The database could take the form of exam cards, for example, and could store target resolution per label data in an exam-dependent way. Given the planned reconstruction field-of-view, and the highest selected resolution in that field-of-view, an image matrix size can then be determined which can store such a resolution. For example, if the field-of-view is 40cm, and the highest required resolution (i.e., target resolution) is 20lp/cm, then the matrix size has to be 40*20*2=1600pixels. In some embodiments, this calculation can be done individually for each slice of a reconstructed volume, yielding varying matrix size depending on the content of the slice, however, for practical reasons, preferably the calculation is only done once using the highest required resolution in the whole volume.

Continuing the example, in JPEG2000 compression, images can be decomposed into different resolution levels, starting with the initial resolution, each level storing detail coefficients of one half of the resolution level above. This means that detail coefficients which contribute, in a particular image region, to a higher resolution than defined in the steps above, can be set to zero. For example, if an image contains a foreground object to be stored at 20lp/cm and a background to be stored at 5lp/cm, the highest two resolution levels of the background region can be set to zero, because these two levels represent details at a resolution of 20 and 10 lp/cm respectively. The setting to zero of regions in the decomposed images is an advantageous step in order to achieve high image compression rates after entropy encoding in JPEG2000.

The processing steps described above in the example could, for instance, be executed on a reconstruction server or workstation. The result would be a JPEG-2000 compressed image, which could be displayed by any standard DICOM viewing software capable of decompressing JPEG2000 images.

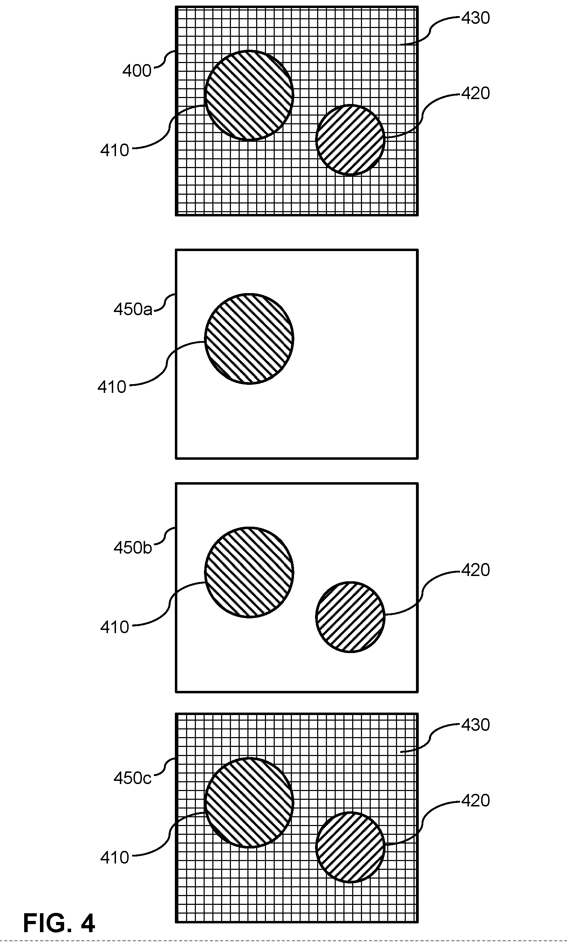

Referring now to Fig. 4, there is depicted a simplified illustration of modified versions, 450a, 450b, and 450c, of a medical image 400 comprising two anatomical features, according to a proposed embodiment.

For instance, the medical image 400 comprises a first region of interest 410 comprising a first anatomical structure, a second region of interest 420 comprising a second anatomical structure, and a region of non-interest 430 (the remaining parts of the medical image).

The medical image 400 is then decomposed into three versions: a high-resolution version 450a with a resolution matching a predetermined target resolution for the first region of interest 410 and matching the resolution of the original medical image 400; a middle-resolution version 450b with a resolution matching a predetermined target resolution for the second region of interest 420 (which is lower than the predetermined target resolution of the first region of interest); and a low-resolution version 450c with a resolution matching a predetermined base resolution for the region of non-interest 430 (which is lower than the predetermined target resolution for the second region of interest).

As can be seen, in the high-resolution version 450a, all data in the region of non-interest 430 and in the second region of interest 420 is deleted/removed, only leaving data in the first region of interest 410 intact. In the middle-resolution version 450b, all data in the region of non-interest 430 is deleted again, but the data in the first 410 and second 420 regions of interest are left intact, as the predetermined target resolution for the first ROI exceeds the resolution of the middle-resolution version 450b and the predetermined target resolution for the second ROI matches the resolution of the middle resolution version 450b. In the low-resolution version 450c, no data is removed as the predetermined resolutions for all the regions either matches or exceeds the resolution of the low-resolution version.

The three modified versions, 450a, 450b, and 450c, can then be combined into a modified medical image which contains less data than the original medical image 400 but still contains the regions of interest at suitably high resolutions respectively.

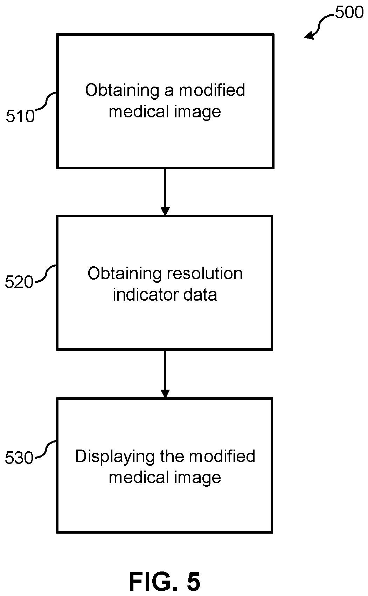

Referring now to Fig. 5, there is depicted a computer-implemented method 500 for displaying a medical image file generated by the method of any of the herein-disclosed methods for generating a medical image file, according to a proposed embodiment. The method 500 begins with step 510 comprising obtaining a modified medical image having a region of interest with a predetermined target resolution and at least one region of non-interest with a lower predetermined base resolution (i.e., a modified medical image generated according to any herein disclosed method).

Step 520 comprises obtaining resolution indicator data indicating the at least one region of non-interest. This can be achieved by one of two ways - first, by receiving the resolution indicator data (e.g., communicated from the system which processed the medical image to identify the region of interest and the at least one region of non-interest); or second, by determining the resolution indicator data by processing the medical image (e.g., by analyzing the medical image itself, for example, to identify regions of downgraded resolution, or regions of removed data in different versions of the medical image). For example, the regions of lowest downgraded resolution could be determined as the region(s) of non-interest. Furthermore, for modified medical images in which the region of interest has also had its resolution downgraded, the resolution indicator data can, in some embodiments, also indicate the region of interest. In some embodiments, the resolution indicator data can comprise a label mask (for example, with the labels indicating areas which have had their resolution downgraded, and optionally, by how much).

In step 530, the modified medical image is then displayed with an overlay based on the resolution indicator data. For example, this overlay can comprise at least one of: a bounding box; a segmentation mask; a heat map; contours; and a text label. In some embodiments, the overlay can thus be partially transparent.

Method 500 thus facilitates explicitly informing a user as to which parts of the obtained modified medical image have had their resolution downgraded (e.g., the region(s) of non-interest, and potentially, also, the region of interest) such that there is no confusion as to why part of an image might appear low-quality. In preferred embodiments, this is facilitated without even having to send any additional information (i.e., the resolution indicator data) as the resolution indicator data can be determined directly from the modified medical image itself.

In other words, it would be desirable to make the user aware of the non-standard processing (e.g., the zero-setting in the different resolution levels) in certain areas of the image. One way to do this would be to transmit a label image/mask together with the medical image, however, this would increase the total size of the image. Another way to do this, however, would be to reconstruct a label mask (i.e., the resolution indicator data) from, for example, decomposition-level images (i.e., versions of the medical image). A masked-out region could be identified as a connected component containing exactly zero in the detail coefficients for one resolution level, for example. Regions with exactly zero values are highly unlikely in an image without artificial manipulation and these can thus be reconstructed with relatively high confidence. The stored resolution per image region could then also be determined as the resolution level at which the detail coefficients for that region transition from zero to non-zero, thus allowing a user to be directly informed what resolution each region of the image is at. For example, the decompressed image could then be displayed with optional guidance overlays for the user, indicating the effective resolution stored per image region, for example, possibly providing a quantitative indication for the resolution, e.g., in lp/cm.

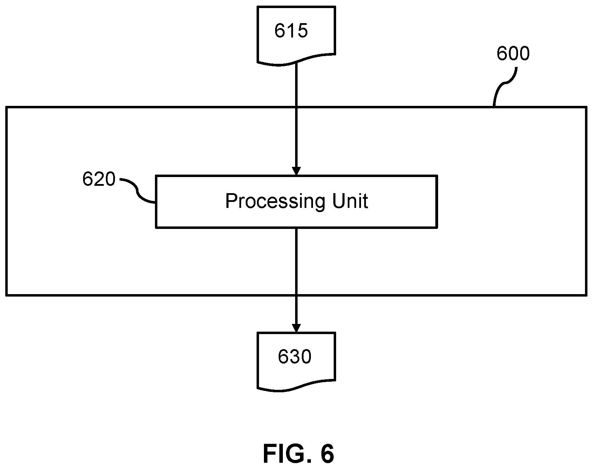

Referring now to Fig. 6, there is depicted a system 600 for generating a medical image file according to a proposed embodiment. The system 600 comprises a processing unit 620.

The processing unit 620 is configured to carry out any herein disclosed method for generating a medical image file. For example, in this embodiment, the processing unit 620 is configured to carry out the method 100 of Fig. 1A, i.e., to: process a medical image comprising a representation of an anatomical feature to identify a region of interest comprising the anatomical feature and at least one region of non-interest; and process the medical image to generate a modified medical image for subsequent compression, such that the region of interest (in the modified medical image) has a predetermined target resolution and the at least one region of non-interest (in the modified medical image) has a predetermined base resolution, wherein the predetermined target resolution is higher than the predetermined base resolution. The input 615 into the system 600 is thus a medical image comprising a representation of an anatomical feature, and the output 630 of the system 600 is thus a modified medical image for subsequent compression.

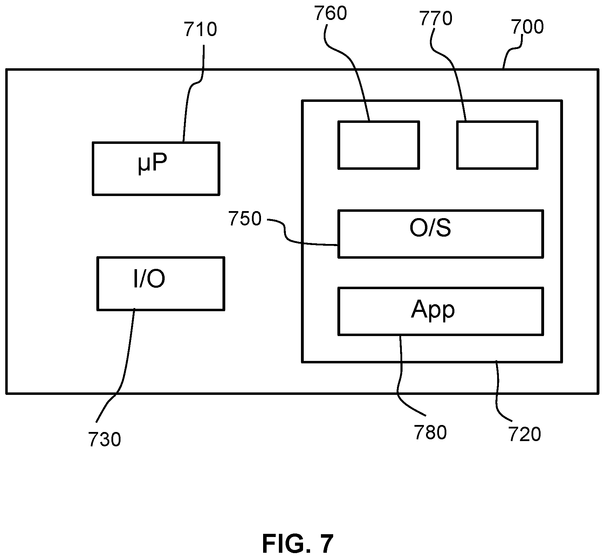

Fig. 7 illustrates an example of a computer 700 within which one or more parts of an embodiment may be employed. Various operations discussed above may utilize the capabilities of the computer 700. In this regard, it is to be understood that system functional blocks can run on a single computer or may be distributed over several computers and locations (e.g. connected via internet).

The computer 700 includes, but is not limited to, PCs, workstations, laptops, PDAs, palm devices, servers, storages, and the like. Generally, in terms of hardware architecture, the computer 700 may include one or more processors 710, memory 720 and one or more I/O devices 730 that are communicatively coupled via a local interface (not shown).

The processor 710 is a hardware device for executing software that can be stored in the memory 720. The processor 710 can be virtually any custom made or commercially available processor, a central processing unit (CPU), a digital signal processor (DSP), or an auxiliary processor among several processors associated with the computer 700.

The memory 720 can include any one or combination of volatile and non-volatile memory elements. Moreover, the memory 720 may incorporate electronic, magnetic, optical, and/or other types of storage media.

The software in the memory 720 may include one or more separate programs, each of which comprises an ordered listing of executable instructions for implementing logical functions. The software in the memory 720 includes a suitable operating system (O/S) 750, compiler 760, source code 770, and one or more applications 780 in accordance with exemplary embodiments. As illustrated, the application 780 comprises numerous functional components for implementing the features and operations of the exemplary embodiments. The application 780 of the computer 700 may represent various applications, computational units, logic, functional units, processes, operations, virtual entities, and/or modules in accordance with exemplary embodiments, but the application 780 is not meant to be a limitation.

The operating system 750 controls the execution of other computer programs, and provides scheduling, input-output control, file and data management, memory management, and communication control and related services. It is contemplated by the inventors that the application 780 for implementing exemplary embodiments may be applicable on all commercially available operating systems.

Application 780 may be a source program, executable program (object code), script, or any other entity comprising a set of instructions to be performed.

The I/O devices 730 may include input devices such as, for example but not limited to, a mouse, keyboard, scanner, microphone, camera, etc. Furthermore, the I/O devices 730 may also include output devices, for example but not limited to a printer, display, etc. Finally, the I/O devices 730 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 730 also include components for communicating over various networks, such as the Internet or intranet.

When the computer 700 is in operation, the processor 710 is configured to execute software stored within the memory 720, to communicate data to and from the memory 720, and to generally control operations of the computer 700 pursuant to the software. The application 780 and the O/S 750 are read, in whole or in part, by the processor 710, perhaps buffered within the processor 710, and then executed.

When the application 780 is implemented in software it should be noted that the application 780 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 780 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The methods of Figs. 1-3 and 5, and the system of Fig. 6, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Fig. 7 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions, the architecture, functionality, and operation of possible implementations of systems, methods, and computer program products according to various embodiments of the present invention.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Implementations in accordance with the present disclosure relate to various techniques, methods, schemes and/or solutions pertaining to generating a medical image file. According to proposed concepts, a number of possible solutions may be implemented separately or jointly. That is, although these possible solutions may be described above separately, two or more of these possible solutions may be implemented in one combination or another.

## Claims

1. A computer-implemented method (100) for generating a medical image file, the method comprising:
processing a medical image (110) comprising a representation of an anatomical feature to identify a region of interest comprising the anatomical feature and at least one region of non-interest; and
processing the medical image (120) to generate a modified medical image for subsequent compression, such that the region of interest has a predetermined target resolution and the at least one region of non-interest has a predetermined base resolution, wherein the predetermined target resolution is higher than the predetermined base resolution.

2. The computer-implemented method of claim 1, wherein processing the medical image to generate a modified medical image comprises:
downgrading the resolution of the at least one region of non-interest (130) based on the predetermined base resolution for the at least one region of non-interest and the resolution of the medical image; and
downgrading the resolution of, dependent on a predetermined target resolution for the region of interest and the resolution of the medical image, the region of interest (140).

3. The computer-implemented method of any of claims 1 or 2, wherein processing the medical image to generate a modified medical image comprises:
decomposing the medical image (225) into at least two versions of the medical image corresponding to at least the target resolution and the base resolution respectively; and
for each version of the image:
removing, dependent on the predetermined base resolution and the resolution of the version of the medical image, data from the at least one region of non-interest (230); and
removing, dependent on the predetermined target resolution and the resolution of the version of the medical image, data from the region of interest (240);
such that the modified medical image comprises at least two modified versions of the medical image.

4. The computer-implemented method of claim 3, wherein decomposing the medical image (225) comprises using wavelet transforms.

5. The computer-implemented method of claims 3 or 4, wherein removing data comprises removing all the data.

6. The computer-implemented method of any of claims 1 to 5, wherein the medical image comprises a representation of at least two different anatomical features, and at least two different regions of interest are identified comprising each of the at least two different anatomical features respectively, and wherein the at least two different anatomical features correspond to at least two different predetermined target resolutions respectively.

7. The computer-implemented method of any of claims 1 to 6, wherein the predetermined target resolution is based on a predetermined database of anatomical features and corresponding predetermined target resolutions.

8. The computer-implemented method of claim 7, wherein the predetermined database is exam-specific.

9. The computer-implemented method of any of claims 1 to 8, wherein the anatomical feature comprises at least one of: an organ; a bone; a muscle; a vein; an artery; and fat.

10. The computer-implemented method of any of claims 1 to 9, wherein processing the medical image to identify the region of interest comprises segmenting the medical image (310).

11. The computer-implemented method of claim 10, wherein segmenting the medical image comprises using an AI- or atlas-based segmentation.

12. The computer-implemented method of claim 10 or 11, wherein segmenting the medical image is based on user input.

13. A computer-implemented method (500) for displaying a medical image file generated by the method of any of claims 1 to 12, the method comprising:
obtaining a modified medical image (510) having a region of interest with a predetermined target resolution and at least one region of non-interest with a lower predetermined base resolution;
obtaining resolution indicator data (520) indicating the region of interest and the at least one region of non-interest by receiving the resolution indicator data or by determining the resolution indicator data by processing the medical image; and
displaying the modified medical image with an overlay (530) based on the resolution indicator data.

14. A computer program product comprising computer program code means which, when executed on a computing device having a processing system, cause the processing system to perform all of the steps of the computer-implemented method according to any of claims 1 to 13.

15. A system (600) for generating a medical image file, the system comprising:
a processing unit (620) configured to:
process a medical image (615) comprising a representation of an anatomical feature to identify a region of interest comprising the anatomical feature and at least one region of non-interest; and
process the medical image to generate a modified medical image (630) for subsequent compression, such that the region of interest has a predetermined target resolution and the at least one region of non-interest has a predetermined base resolution, wherein the predetermined target resolution is higher than the predetermined base resolution.
